# EUROPEAN PATENT APPLICATION

(11) **EP 1 808 475 A2**
(43) Date of publication of application: **18.07.2007**
(21) Application number: 07000299.3
(22) Date of filing: 09.01.2007
(51) Int. Cl.: C10M 107/34, C10M 173/02, C10M 177/00

(54) **Water-miscible metalworking fluids with reduced aerosol inhalation toxicity**

(30) Priority: 13.01.2006 US 332071; 24.05.2006 US 439576
(71) Applicant: Bayer MaterialScience LLC, Pittsburgh PA 15205 (US)
(72) Inventor: Combs, George G., McMurray PA 15317 (US); Browne, Edward P., South Charleston WV 25309 (US)
(74) Representative: Perchenek, Nils

(57) **Abstract**

The present invention provides a process for producing a water-miscible metalworking fluid involving combining about 90 wt.% to about 5 wt.%, based on the weight of the fluid, of water and one or more additives chosen from plasticizers, chelating agents, biocides, surfactants, dispersants, dyes, odorants, extreme pressure agents, anti-oxidants and corrosion inhibitors with about 10 wt.% to about 95 wt.%, based on the weight of the fluid, of a polyether polyol produced by mixing an active hydrogen compound with a double metal cyanide (DMC) catalyst in a reactor vessel, charging to the reactor vessel a mixture containing two or more alkylene oxides to activate the catalyst, and continuously feeding one or more alkylene oxides to produce the polyether polyol, wherein a 1% solution in water of the polyether polyol has a cloud point of from greater than about 32°C to less than about 53°C, the polyether polyol has a number average equivalent weight of from greater than about 1,000 Da to about 10,000 Da, and a four-hour aerosol inhalation exposure to the polyether polyol has a LC50 of greater than about 5 mg/L. The water-miscible metalworking fluid produced by the inventive process may find use in cooling and/or lubricating metal surfaces during one or more of grinding, cutting, boring, drilling and turning of metal parts.

## Description

### FIELD OF THE INVENTION

The present invention relates, in general to functional fluids, and more specifically to synthetic, water-miscible metalworking fluids (MWFs) which provide effective cooling and lubrication of metal surfaces at high speeds of operation in the grinding, cutting, boring, drilling, and/or turning of metal parts, while also reducing aerosol inhalation toxicity.

### BACKGROUND OF THE INVENTION

Metalworking processes mechanically shape and work metallic articles or work pieces. Metalworking fluids (or metal removal fluids) are often used for the lubrication of metal cutting and forming tools. These fluids also provide cooling for the tool, facilitate the removal of cut chips or fragments from the tool-work piece interface, and help to provide an acceptable post-machining finished surface. Because metalworking fluids have the effect of reducing the cutting forces exerted on a tool and work piece, such fluids can significantly extend the life of the tool.

However, one of the problems associated with the use of metalworking fluids results from the nature of the metalworking operations, i.e., a work piece rotates at a relatively high speed and both the work piece and a metalworking tool are lubricated by a metalworking fluid. Under such conditions, the metalworking fluid is frequently thrown from the surface of the metal in the form of droplets. Oftentimes, these droplets are small enough to be classified as a mist which may pose a potential inhalation risk to the metal worker.

In 1993, the United Automobile Aerospace and Agricultural Implement Workers of America (UAW) filed a petition requesting that the U.S. Dept. of Labor's Occupational Safety & Health Administration (OSHA) take regulatory action to protect workers from the potential risks of cancer and respiratory illness arising from exposure to metalworking fluids (MWFs). In response, OSHA convened the Metalworking Fluids Standard Advisory Committee in 1997 to "...advise the agency on appropriate actions to protect workers from the hazards associated with occupational exposure to MWFs".

In 2001, OSHA issued the publication, "Metalworking Fluids: Safety and Health Best Practices Manual" to provide guidelines for reducing employee exposure to MWFs and to provide information on the health hazards of occupational exposure. This manual recommends that, "...the MWFs selected should be as non-irritating and non-sensitizing as possible.... Acute toxicity characteristics of metalworking fluids can be evaluated using information contained in ASTM Standard E-1302-00, Standard Guide for Acute animal Toxicity Testing of Water-Miscible Metalworking Fluids".

To date, most industry efforts have focused on reducing worker exposure through engineering modifications or through the use of anti-misting aids. One such solution is exemplified by U.S. Pat. No. 6,344,517, issued to Quinn et al., which describes water-soluble or water-dispersible polymeric acrylate derivatives as additives for mist reduction and shear stability in metalworking formulations.

Although such suspected cancer-causing agents as alkali metal nitrites, chromates, and para-tert-butylbenzoic acid have been removed from water-based metalworking fluids, there still may be concerns regarding possible respiratory problems from the inhalation of aerosols generated from butanol-started polyether polyols that are the primary constituents of many synthetic, water-miscible metalworking fluids.

In a report by the European Centre for Ecotoxicology and Toxicology of Chemicals (ECETOC) entitled, "Technical Report No. 55 - Pulmonary Toxicity of Polyalkylene Glycols" published in 1997, certain 50:50 ethylene oxide-propylene oxide (EO-PO) random copolymers initiated with butanol were identified as being toxic in aerosol inhalation studies with animals. No butanol-initiated EO-PO copolymers above a 1,000 equivalent weight met the limit test of an LC50 greater than 5 mg/L as described in ASTM Standard E-1302-00. For inhalation experiments, the concentration of the chemical in air that kills 50% of the test animals in a given time (typically four hours) is termed the LC50 value. As a general rule, the smaller the LC50 value, the higher the toxicity. The opposite also holds true, i.e., the larger the LC50 value, the lower the toxicity.

Typically, water-miscible polyether polyols useful in metalworking fluids have been prepared by semi-batch processes involving the base-catalyzed anionic polymerization of alkylene oxides. As those skilled in the art are aware, in such processes an active hydrogen compound is charged to a reactor along with a basic catalyst, such as sodium or potassium hydroxide, the mixture is dehydrated, and an alkylene oxide or mixture of alkylene oxides is added to produce the polyether. Usually, these polyols are random copolymers prepared from butanol, ethylene oxide (EO), and propylene oxide (PO) and have been marketed under such trade names as the PLURASAFE WS fluid series (BASF Corp.) and the UCON HB fluid series (Dow Chemical Co.).

One solution to the problem of aerosol toxicity for base-catalyzed polyols is disclosed by Pollmann et al., in U.S. Published Patent Application 2001/0031855 A1, where ethylene oxide-propylene oxide copolymers of higher functionality polyether polyols containing central branch points are shown to have LC50 values greater than about 5 mg/L. However, the branched polyether polyols of Pollmann et al. are sufficiently different in performance from current butanol-started compounds that reformulation of metalworking additive packages would be required and thus their ultimate performance may not be comparable.

As those skilled in the art are aware, double metal cyanide (DMC) catalysts have been used to prepare polyether polyols. These catalysts, which have a low tendency to promote isomerization of propylene oxide to allylic unsaturates and have faster rates of reaction, are prepared by the reaction of hexacyanometallate salts with transition metal salts in the presence of suitable organic ligands.

An example of DMC catalyst utilization for the preparation of random copolymers of ethylene and propylene oxide can be found in EP 0,992,523 B1, issued to Miller et al., which describes a process for the activation or initiation of the catalyst with 100% propylene oxide prior to feeding a mixture of ethylene oxide and propylene oxide to make a monofunctional polyether for use in silicone surfactant production. However, Miller et al., are silent as to any risks associated with aerosol or mist exposure to their polyethers.

Clement et al., in U.S. Pat. No. 6,642,423, teach that DMC catalysts are useful for the preparation of ethoxylates from starters which are sensitive to conventional basic or Lewis acid type catalysts. However, polyether polyols prepared in accordance with processes used in Clement et al., contain a pure block of ethylene oxide adjacent to the initiator molecule. Conversely, U.S. Published Patent Application 2005/0181967 A1 in the name of Ruland et al., discloses alkoxylates prepared from C10 alkanols in the presence of DMC catalysts where a pure propyleneoxy, buteneoxy, or penteneoxy block is attached to the initiator.

Ruland et al., in U.S. Published Patent Application 2005/0215452 A1, also teach the use of DMC catalysts to prepare C10 alcohol-initiated polyether polyols with block or random copolymer structures but are silent with respect to the benefits of catalyst activation with an alkylene oxide mixture for reduced aerosol inhalation toxicity.

Polyether polyols useful as foam suppressants can be made using DMC catalysts as described in U.S. Pat. No. 7,001,634, issued to Browne. However, those random copolymers are marginally water soluble at slightly elevated temperatures with cloud points for 1% aqueous solutions being less than 30° C. Browne is also silent regarding potential risks associated with aerosol or mist exposure to his foam suppressants in metalworking applications.

Sherman et al., in U.S. Published Patent Application 2005/0256014 A1, teach that EO-PO copolymer monols and diols with unsaturation levels below 0.01 meq/g exhibit low pulmonary toxicity. However, it is well-known by those skilled in the art that some of the lower equivalent weight base-catalyzed commercial products mentioned in the previously referenced ECETOC Technical Report 55 have low levels of unsaturation and low pulmonary toxicity. For example, Table 1 of the Report illustrates that typical values for unsaturation of 2,000 equivalent weight butanol-started monols are less than about one percent, which corresponds to less than about 0.005 meq/g of unsaturation. Sherman et al. also disclose the parallel addition of a monol or diol initiator along with the alkylene oxides. However, there still exists a desire to provide a detailed method for the production of higher equivalent weight polyols with acute aerosol inhalation LC50 values greater than about 5 mg/L for use in industrial applications where there is a potential for the production of mists or aerosols.

Therefore, an improved process is needed for the production of water-miscible metalworking fluids that are less toxic with respect to aerosol inhalation exposure than are currently available commercial products. More importantly, a process for the production of polyether polyols for metalworking fluids that meet or exceed the limit test of an LC50 greater than about 5 mg/L, as defined in ASTM Standard E-1302-00, at equivalent weights greater than about 1,600 Da would be very desirable.

### SUMMARY OF THE INVENTION

The present invention provides such a process for producing a water-miscible metalworking fluid involving combining about 90 wt.% to about 5 wt.%, based on the weight of the fluid, of water and one or more additives chosen from plasticizers, chelating agents, biocides, surfactants, dispersants, dyes, odorants, extreme pressure agents, anti-oxidants and corrosion inhibitors with about 10 wt.% to about 95 wt.%, based on the weight of the fluid, of a polyether polyol produced by mixing an active hydrogen compound with a double metal cyanide (DMC) catalyst in a reactor vessel, charging to the reactor vessel a mixture containing two or more alkylene oxides to activate the catalyst, and continuously feeding one or more alkylene oxides to produce the polyether polyol, wherein a 1% solution in water of the polyether polyol has a cloud point of from greater than about 32°C to less than about 53°C, the polyether polyol has a number average equivalent weight of from greater than about 1,000 Da, preferably greater than about 1,600 Da to about 10,000 Da, and a four-hour aerosol inhalation exposure to the polyether polyol has a LC50 of greater than about 5 mg/L.

The process of the present invention may allow for the formulation and selection of less toxic metalworking fluids (MWFs) based on the inhalation test protocols referenced in the OSHA "Metalworking Fluids: Safety and Health Best Practices Manual".

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, hydroxyl numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a process for producing a water-miscible metalworking fluid involving combining 90 wt.% to 5 wt.%, based on the weight of the fluid, of water and one or more additives chosen from plasticizers, chelating agents, biocides, surfactants, dispersants, dyes, odorants, extreme pressure agents, anti-oxidants and corrosion inhibitors with 10 wt.% to 95 wt.%, based on the weight of the fluid, of a polyether polyol produced by mixing an active hydrogen compound with a double metal cyanide (DMC) catalyst in a reactor vessel, charging to the reactor vessel a mixture containing two or more alkylene oxides to activate the catalyst, and continuously feeding one or more alkylene oxides to produce the polyether polyol, wherein a 1 % solution in water of the polyether polyol has a cloud point of from greater than 32°C to less than 53°C, the polyether polyol has a number average equivalent weight of greater than 1,000 Da, preferably greater than 1,600 Da to 10,000 Da, and a four-hour aerosol inhalation exposure to the polyether polyol has a LC50 of greater than 5 mg/L.

The present invention further provides a process for producing a water-miscible metalworking fluid involving combining 90 wt.% to 5 wt.%, based on the weight of the fluid, of water and one or more additives chosen from plasticizers, chelating agents, biocides, surfactants, dispersants, dyes, odorants, extreme pressure agents, anti-oxidants and corrosion inhibitors with 10 wt.% to 95 wt.%, based on the weight of the fluid, of a polyether polyol produced by mixing with a double metal cyanide (DMC) catalyst in a reactor vessel an active hydrogen compound, in particular an initiator chosen from one or more of a polyol from a prior preparation (heel) having an equivalent weight greater than 300 Da, a lower molecular weight active hydrogen compound that does not deactivate the DMC catalyst and an inert solvent, charging to the reactor vessel a mixture containing two or more alkylene oxides to activate the catalyst, and continuously feeding one or more alkylene oxides and one or more starters to produce the polyether polyol, wherein a 1% solution in water of the polyether polyol has a cloud point of from greater than 32°C to less than 53°C, the polyether polyol has a number average equivalent weight of greater than 1,000 Da, preferably greater than 1,600 Da to 10,000 Da, and a four-hour aerosol inhalation exposure to the polyether polyol has a LC50 of greater than 0.5 mg/L, preferably greater than 3 mg/L, more preferably greater than 5 mg/L.

The inventors herein have unexpectedly discovered that double metal cyanide (DMC) catalysts can be used to prepare random copolymers of ethylene and propylene oxide that exhibit reduced toxicity to animals as measured by acute aerosol inhalation toxicity testing. More specifically, the inventors have discovered a process for the activation of DMC catalysts with a mixture of alkylene oxides in which the polymerization product has a number average equivalent weight of greater than 1,000 Da, preferably from greater than 1,600 Da to 10,000 Da, more preferably 1,600 to 6,000, is water-miscible with a cloud point of from greater than 32°C to less than 53°C, and has a LC50 greater than 5 mg/L for a four-hour aerosol exposure.

As used herein, the term "water-miscible metalworking fluid" means a liquid containing water, additives that help "wet" the part and other additives to improve performance and a polyether polyol. The polyether polyol makes up from 10 to 95 wt.%, more preferably from 40 to 90 wt.% of the water-miscible metalworking fluid produced by the inventive process. Water makes up from 90 to 5 wt.% more preferably from 60 to 10 wt.%, with the remainder of the water-miscible metalworking fluid being one or more additives. Suitable additives include, but are not limited to, plasticizers, chelating agents, surfactants, biocides, dispersants, dyes, and odorants, extreme pressure agents, anti-oxidants, and corrosion inhibitors to improve performance and increase fluid life.

Suitable examples of methods for the preparation of DMC catalysts and the use thereof in the manufacture of polyether polyols can be found in U.S. Pat. Nos. 3,278,457, 3,404,109, 3,941,849 and 5,158,922, 5,482,908, 5,783,513, 6,613,714, 6,855,658, the entire contents of which are incorporated herein by reference thereto.

As those skilled in the art are aware, DMC catalysts are made by the reaction of hexacyanometallate salts with transition metal salts in the presence of suitable complexing organic ligands and optionally with functionalized polymers or other processing aids to produce a compound with the formula given below:

M1x[M2(CN)6]y.zM1(X)q·L

wherein,
- M1: represents a metal selected from the group consisting of Zn+2, Fe+2, Ni+2, Mn+2, Co+2, Sn+2, Pb+2, Fe+3, Mo+4, Mo+6, Al+3, V+4, V+5, Sr+2, W+4, W+6, Cu+2 and Cr+3;

- M2: represents a metal selected from the group consisting of Fe+2, Fe+3, Co+2, Co+3, Cr+2, Cr+3, Mn+2, Mn+3, Ir+3, Ni+2, Rh+3, Ru+2, V+4 and V+5;
- X: represents an anion selected from the group consisting of halide, hydroxide, sulfate, carbonate, cyanide, thiocyanide, carboxylate, or nitrate;
- L: represents an organic ligand; and
- x, y, and q: are chosen to maintain electroneutrality.

Particularly preferred for use in the present invention are those zinc hexacyanocobaltate catalysts prepared by the methods described in U.S. Pat. No. 5,482,908, the entire contents of which are incorporated herein by reference thereto. The DMC catalyst may also be bound to a support as described in U.S. Pat. No. 6,362,126.

Any monofunctional or polyfunctional active hydrogen compound may be oxyalkylated in the process of the invention. Suitable monofunctional initiators include, but are not limited to, methanol, ethanol, propanol, butanol, pentanol, phenols, C6-C36 branched or linear alcohols, and monofunctional ethers of polypropylene glycols, polyethylene glycols, polybutylene glycols, and polyoxyalkylene glycol copolymers. Polyfunctional initiators include, but are not limited to, water, ethylene glycol, propylene glycol, diethylene glycol, dipropylene glycol, triethylene glycol, tripropylene glycol, propanediol, glycerine, trimethylolpropane, butanediol isomers, pentaerythritol, polypropylene glycols, polyethylene glycols, polybutylene glycols, and polyoxyalkylene glycol copolymers. Butanol is particularly preferred as the active hydrogen compound.

The alkylene oxides useful in the present invention include, but are not limited to, ethylene oxide, propylene oxide, 1,2- and 2,3-butylene oxide, isobutylene oxide, epichlorohydrin, cyclohexene oxide, styrene oxide, and the higher alkylene oxides such as the C5 -C30 α-alkylene oxides. Other polymerizable monomers may be used as well, e.g. anhydrides and other monomers as disclosed in U.S. Pat. Nos. 3,404,109, 3,538,043 and 5,145,883, the contents of which are herein incorporated in their entireties by reference thereto. A mixture of ethylene oxide and propylene oxide is particularly preferred wherein the amount of ethylene oxide is preferably less than 50% of the mixture.

The polyether polyol of the water-miscible metalworking fluid made by the process of the present invention preferably has an equivalent weight greater than 1,000 Da, more preferably greater than 1,300 Da, and most preferably greater than 1,600 Da. The equivalent weight of the polyether polyol in the process of the present invention may be in an amount ranging between any combination of these values, inclusive of the recited values.

The polyether polyol of the water-miscible metalworking fluid produced by the inventive process preferably has a cloud point above 32 °C, more preferably greater than 35°C, and most preferably greater than 37 °C. The cloud point of the polyether polyol in the process of the present invention may be in an amount ranging between any combination of these values, inclusive of the recited values.

The polyether polyol of the water-miscible metalworking fluid produced by the inventive process preferably has a LC50 for a four-hour aerosol inhalation exposure of greater than 0.50 mg/L, more preferably greater than 3 mg/L, and most preferably greater than 5 mg/L. The LC50 for a four-hour aerosol inhalation exposure to the polyether polyol in the inventive process may be an amount ranging between any combination of these values, inclusive of the recited values.

The process of the present invention may be semi-batch or continuous as described in U.S. Pat. No. 5,777,177, the entire contents of which are incorporated herein by reference thereto. In the inventive variation of the continuous process described in the '177 Patent, the starter or initiator is preferably a monofunctional or polyfunctional active hydrogen compound with an average equivalent weight less than 300 Da, while the material charged initially to the reaction vessel may be one or more of a polyol from a prior preparation (heel) with an equivalent weight greater than 300 Da, a lower molecular weight active hydrogen compound that does not deactivate the DMC catalyst, and an inert solvent.

The water-miscible metalworking fluids prepared by the process of the present invention may preferably be used to cool and/or lubricate metal surfaces during the grinding, cutting, boring, drilling and/or turning of metal parts.

### EXAMPLES

The present invention is further illustrated, but is not to be limited, by the following examples. All quantities given in "parts" and "percents" are understood to be by weight, unless otherwise indicated.

### Example 1

This example employed a product-to-product process together with continuous addition of starter (CAOS), in which a heel of product (prepared from butanol and propylene oxide/ethylene oxide to a hydroxyl number of about 35 mg KOH/g via a CAOS process) was added to the reactor at the beginning of the batch, a mixture of ethylene oxide and propylene oxide was added to activate the catalyst, and an initiator or starter was fed continuously to the reactor simultaneously with the alkylene oxide or oxides after activation. Double metal cyanide (DMC) catalyst prepared according to U.S. Pat.No. 5,482,908 was used in all examples. A heel of 2,500 g of product was added to a 20 kg reactor along with DMC catalyst (0.87 g). The mixture was dehydrated with vacuum and nitrogen for 30 minutes at 130°C. The catalyst was activated with 125 g of mixed oxide (50 wt.% propylene oxide, 50 wt.% ethylene oxide) fed at 130°C. After the pressure drop in the reactor confirmed catalyst initiation, propylene oxide (8,306 g), ethylene oxide (8,306 g), and n-butanol (763 g) were added to the reactor simultaneously over a six-hour period at 130°C to produce a polyether with a hydroxyl number of about 34 mg KOH/g. This product had an number average equivalent weight of 1,716 g/mol, a viscosity of 810 SUS at 37.8°C, a cloud point (1% in water) of 52°C, and an LC50 concentration of >5.83 mg/L for a four-hour aerosol exposure.

### Example 2

The procedure described above in Example 1 was repeated, except the ethylene oxide/propylene oxide ratio was 35/65, and the amount of n-butanol fed was reduced to produce a polyether with a hydroxyl number of about 17 mg KOH/g. The resulting product had a number average equivalent weight of 3,187 g/mol, a viscosity of 2,060 SUS at 37.8°C, a cloud point (1% in water) of 40°C, and an LC50 concentration of >5.38 mg/L for a four-hour aerosol exposure.

### Example 3

A semi-batch process, in which alkylene oxides are added to an initiator without the presence of a continuous starter feed was used. The reactor was charged with 5,426 g of product similar to that described in
Ex. 1 above together with DMC catalyst (0.9 g). The mixture was dehydrated with vacuum and nitrogen for 30 minutes at 130°C. The catalyst was activated with 271 g of mixed oxide (50 wt.% propylene oxide, 50 wt.% ethylene oxide) fed at 130°C. After the pressure drop in the reactor confirmed catalyst initiation, propylene oxide (6,204 g) and ethylene oxide (6,204 g) were added to the reactor simultaneously over a five-hour period to produce a polyether with a hydroxyl number of about 10 mg KOH/g. This product had an number average equivalent weight of 5,968 g/mol, a viscosity of 5,340 SUS at 37.8°C, a cloud point (1% in water) of 56°C, and an LC50 concentration <5.9 mg/L for a four-hour aerosol exposure.

As can be appreciated by reference to Table I below, butanol-initiated random copolymers of EO and PO with higher equivalent weights that meet the limit value of 5 mg/L can be produced by the inventive process. Although, the present invention allows for the formulation and selection of less toxic polyether polyol for metalworking fluids (MWFs) based on the inhalation test protocols referenced in the OSHA "Metalworking Fluids: Safety and Health Best Practices Manual", the inventors herein caution that such polyols should be evaluated for aerosol inhalation toxicity on an individual basis.

### Example 4

The procedure described above in Example 2 was repeated, except the ethylene oxide/propylene oxide ratio was 50/50. The resulting product had a weight average equivalent weight of 3,645 g/mol, a viscosity of 2,298 SUS at 37.8°C, a cloud point (1% in water) of 53°C, and an LC50 concentration of <5 mg/L for a four-hour aerosol exposure.

### Example 5

The procedure described above in Example 3 was repeated, except the ethylene oxide/propylene oxide ratio was 35/65. The resulting product had a weight average equivalent weight of 5250 g/mol, a viscosity of 4762 SUS at 37.8°C, a cloud point (1% in water) of 37.7°C, and an LC50 concentration of >5 mg/L for a four-hour aerosol exposure.

**Table I**

| **Ex. No.** | **EO/PO** | **Equiv. Wt.** | **Viscosity (SUS at 38°C)** | **Cloud point (1% in water)** | **LC50 four hour 1 (mg/L)** |
|---|---|---|---|---|---|
| 1 | 50/50 | 1,716 | 810 | 52 | >5.83 |
| 2 | 35/65 | 3,187 | 2,060 | 40 | >5.38 |
| 3 | 50/50 | 5,968 | 5,340 | 56 | <5.90 |
| 4 | 50/50 | 3573 | 2298 | 53 | <5.4 |
| 5 | 35/65 | 5447 | 4762 | 37.7 | >5.1 |

| | | | | | |
|---|---|---|---|---|---|
| 1 - Four-hour, nose-only, exposure using female and male Sprague-Dawley rats. | | | | | |

**Table II**

| **Commercial Product 3** | **EO/PO** | **Equiv. Wt.** | **Viscosity (SUS at 38°C)** | **Cloud point (1% in water)** | **LC50 four hour 2 (mg/L)** |
|---|---|---|---|---|---|
| 50-HB-660 | 50/50 | 1,590 | 660 | 55 | 4.5 |
| 50-HB-2000 | 50/50 | 2,620 | 2,000 | 52 | 0.35 |
| 50-HB-5100 | 50/50 | 3,930 | 5,100 | 50 | 0.10 |

| | | | | | |
|---|---|---|---|---|---|
| 2 - Commercial product acute inhalation data from Technical Report No. 55 by ECETOC, 1997. 3 - Physical property data for commercial products from UCON Fluids and Lubricants brochure by Dow Chemical Company. | | | | | |

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A process for producing a water-miscible metalworking fluid comprising combining:
water; and
one or more additives chosen from plasticizers, chelating agents, biocides, surfactants, dispersants, dyes, odorants, extreme pressure agents, anti-oxidants and corrosion inhibitors; with
a polyether polyol produced by
mixing an active hydrogen compound with a double metal cyanide (DMC) catalyst in a reactor vessel,
charging to the reactor vessel a mixture containing two or more alkylene oxides to activate the catalyst, and
continuously feeding one or more alkylene oxides to produce the polyether polyol,
wherein a 1 % solution in water of the polyether polyol has a cloud point of from greater than about 32°C, the polyether polyol has a number average equivalent weight of from greater than about 1,000 Da, and a four-hour aerosol inhalation exposure to the polyether polyol has a LC50 of greater than about 0.5 mg/L.

2. The process according to Claim 1, wherein the active hydrogen compound is chosen from methanol, ethanol, propanol, butanol, pentanol, phenols, C6-C36 branched or linear alcohols, monofunctional ethers of polypropylene glycols, polyethylene glycols, polybutylene glycols, polyoxyalkylene glycol copolymers, water, ethylene glycol, propylene glycol, diethylene glycol, dipropylene glycol, triethylene glycol, tripropylene glycol, propanediol, glycerine, trimethylolpropane, butanediol isomers, pentaerythritol, polypropylene glycols, polyethylene glycols, polybutylene glycols and polyoxyalkylene glycol copolymers.

3. The process according to Claim 1, wherein the active hydrogen compound is butanol.

4. The process according to Claim 1, wherein the DMC catalyst is a zinc hexacyanocobaltate.

5. The process according to Claim 1, wherein the mixture contains two or more alkylene oxides chosen from ethylene oxide, propylene oxide, 1,2- and 2,3-butylene oxide, isobutylene oxide, epichlorohydrin, cyclohexene oxide, styrene oxide and C5 -C30 α-alkylene oxides.

6. The process according to Claim 1, wherein the continuous feeding is of one or more alkylene oxides chosen from ethylene oxide, propylene oxide, 1,2- and 2,3-butylene oxide, isobutylene oxide, epichlorohydrin, cyclohexene oxide, styrene oxide and C5 -C30 α-alkylene oxides.

7. The process according to Claim 1, wherein the water-miscible metalworking fluid comprises from about 40 wt.% to about 90 wt.%, based on the weight of the fluid, of the polyether polyol and from about 60 wt.% to about 10 wt.%, based on the weight of the fluid, of water.

8. The process according to Claim 1, wherein the polyether polyol has a number average equivalent weight of from about 1,600 Da to about 6,000 Da.

9. The water-miscible metalworking fluid produced by the process according to Claim 1.

10. A process for producing a water-miscible metalworking fluid comprising combining:
about 90 wt.% to about 5 wt.%, based on the weight of the fluid, of water; and
one or more additives chosen from plasticizers, chelating agents, biocides, surfactants, dispersants, dyes, odorants, extreme pressure agents, anti-oxidants and corrosion inhibitors; with
about 10 wt.% to about 95 wt.%, based on the weight of the fluid, of a polyether polyol produced by
mixing with a double metal cyanide (DMC) catalyst in a reactor vessel an initiator chosen from one or more of a polyol from a prior preparation (heel) having an equivalent weight greater than about 300 Da, a lower molecular weight active hydrogen compound that does not deactivate the DMC catalyst and an inert solvent,
charging to the reactor vessel a mixture containing two or more alkylene oxides to activate the catalyst, and
continuously feeding one or more alkylene oxides and one or more starters to produce the polyether polyol,
wherein a 1 % solution in water of the polyether polyol has a cloud point of from greater than about 32°C to less than about 53°C, polyether polyol has a number average equivalent weight of from greater than about 1,600 Da to about 10,000 Da, and a four-hour aerosol inhalation exposure to the polyether polyol has a LC50 of greater than about 5 mg/L.

11. The process according to Claim 10, wherein the initiator is a polyol from a prior preparation (heel) having an equivalent weight greater than about 300 Da.

12. The process according to Claim 10, wherein the initiator is a lower molecular weight active hydrogen compound that does not deactivate the DMC catalyst.

13. The process according to Claim 10, wherein the initiator is an inert solvent.

14. The process according to Claim 10, wherein the DMC catalyst is a zinc hexacyanocobaltate.

15. The process according to Claim 10, wherein the mixture contains two or more alkylene oxides chosen from ethylene oxide, propylene oxide, 1,2- and 2,3-butylene oxide, isobutylene oxide, epichlorohydrin, cyclohexene oxide, styrene oxide and C5 -C30 α-alkylene oxides.

16. The process according to Claim 10, wherein the continuous feeding is of one or more alkylene oxides chosen from ethylene oxide, propylene oxide, 1,2- and 2,3-butylene oxide, isobutylene oxide, epichlorohydrin, cyclohexene oxide, styrene oxide and C5 -C30 α-alkylene oxides.

17. The process according to Claim 10, wherein the starter is chosen from methanol, ethanol, propanol, butanol, pentanol, phenols, C6-C36 branched or linear alcohols, monofunctional ethers of polypropylene glycols, polyethylene glycols, polybutylene glycols, polyoxyalkylene glycol copolymers, water, ethylene glycol, propylene glycol, diethylene glycol, dipropylene glycol, triethylene glycol, tripropylene glycol, propanediol, glycerine, trimethylolpropane, butanediol isomers, polypropylene glycols, polyethylene glycols, polybutylene glycols and polyoxyalkylene glycol copolymers.

18. The process according to Claim 10, wherein the starter is butanol.

19. The process according to Claim 10, wherein the water-miscible metalworking fluid comprises from about 40 wt.% to about 90 wt.%, based on the weight of the fluid, of the polyether polyol and from about 60 wt.% to about 10 wt.%, based on the weight of the fluid, of water.

20. The water-miscible metalworking fluid produced by the process according to Claim 10.
